# EUROPEAN PATENT SPECIFICATION

(11) **EP 0 876 107 B1**
(45) Date of publication and mention of the grant of the patent: **31.07.2002**
(21) Application number: 96901446.3
(22) Date of filing: 02.02.1996
(51) Int. Cl.: A23G 3/28, C09D 11/00, A23G 3/20

(54) **A MACHINE AND METHOD FOR PRINTING ON SURFACES OF EDIBLE SUBSTRATES**
VERFAHREN UND VORRICHTUNG ZUM DRUCKEN AUF OBERFLÄCHEN VON ESSBAREN SUBSTRATEN
MACHINE ET PROCEDE POUR IMPRIMER SUR LA SURFACE DE SUBSTRATS COMESTIBLES

(43) Date of publication of application: 11.11.1998
(73) Proprietor: Cadex Limited, London SE1 2YB (GB)
(72) Inventor: YOUNG, Robert, J., Orpington Kent BR6 OEG (GB)
(74) Representative: Maguire, Peter Albert
(86) International application number: GB9600229
(87) International publication number: WO9727759

(56) References cited:
- EP-A- 0 348 181
- WO-A-92/14795
- WO-A-96/02598
- US-A- 4 585 484
- US-A- 5 118 351
- US-A- 5 397 387
- US-A- 5 453 121
- US-A- 5 453 122

## Description

### FIELD OF THE INVENTION

This invention relates generally to a machine and to a method for printing on an edible substrate. In particular it relates to a machine and a method for printing on an edible substrate using bubble-jet technology to produce a polychromatic or monochromatic image on an edible substrate by the use of a food dye or edible ink.

### RELATED BACKGROUND ART

Decorated cakes are well known and have been decorated by hand for many many years. Various methods are currently in use, e.g. Hand painting of the design, spraying food colouring through a stencil, cutting out shapes from soft icing or marzipan, piping designs with molten chocolate, decorative designs with a piping bag of soft icing, applying plastic or other types of novelty directly to the cake top, silk screening of images onto plaques of sugar or wafer fixed to the cake top or sides, etc. Most celebration cakes are decorated by hand and rely on the skill and dexterity of the operative to achieve quality results. These types of decorated cakes are however expensive and time consuming to produce because of the skilled labour involved and it is not possible with the materials and equipment currently available to produce a commercially viable product by hand with very fine detail together with a multiplicity of colours or fine shading.

### DEFINITION OF AN IMAGE

The term "image" as used throughout the specification and claims refers to any polychromatic or monochromatic design, picture, text or pattern which is required to be reproduced by the invention.

It is an object of the present invention to alleviate the problems and difficulties of known methods and apparatus for the decoration of cakes, etc.

### SUMMARY OF THE INVENTION

According to a first aspect of the present invention there is provided a machine adapted to print an image onto a surface of an edible substrate (9), characterised by a bubble-jet printer head assembly (1), containment means (7) for containing a liquid food colourant, a surface (8) for supporting the said edible substrate (9), said surface and said printer head assembly being movable relative to each other, control means (4) for controlling the said head assembly with printing instructions and for causing said relative movement in accordance with the desired image to be printed upon an edible substrate, and a computer system (12) to store and manipulate the image, the computer system (12) comprising an encryption algorithm by which the image is protectable, and a card reader (14) by which the algorithm can be decrypted.

According to a second aspect of the present invention there is provided a method of printing an image on a surface of an edible substrate (9), characterised by arranging for relative movement between said surface and a bubble-jet printer head assembly (1), providing a scanning device to enable scanning and printing of an image and controlling said printer head assembly (1) to cause a liquid food colourant to be printed upon the substrate in accordance with the desired image.

Preferably the bubble-jet printer head assembly is of the type produced by Canon Inc under European Patent Number EP 0 348 181 A2.

In a preferred method and machine of this invention, the printer head comprises a discharge opening for liquid discharge and an electricity-heat converter. The electricity-heat converter has a region formed by oxidation of at least part of an electro-conductive material, and the region is adapted to generate heat.

The feature of a computer system encryption means which can only be accessed by a purchaser if they first obtain from the supplier the decryption code to unscramble the image enable copyrighted images to be offered to the purchaser whilst still being able to guarantee the copyright holder his rightful royalties based on the number of times the purchaser utilises the image.

Preferably the machine of the present invention is capable of printing on both regular and irregular substrates. Furthermore it is preferred that the machine be adapted to print on surfaces having a degree of three dimensionality.

### DETAILED DESCRIPTION OF A PREFERRED EMBODIMENT

An embodiment of a machine according to the present invention will now be described, by way of example only, by reference to the accompanying drawings in which;
Figure 1 is a diagrammatic representation of an embodiment of a machine according to the present invention;

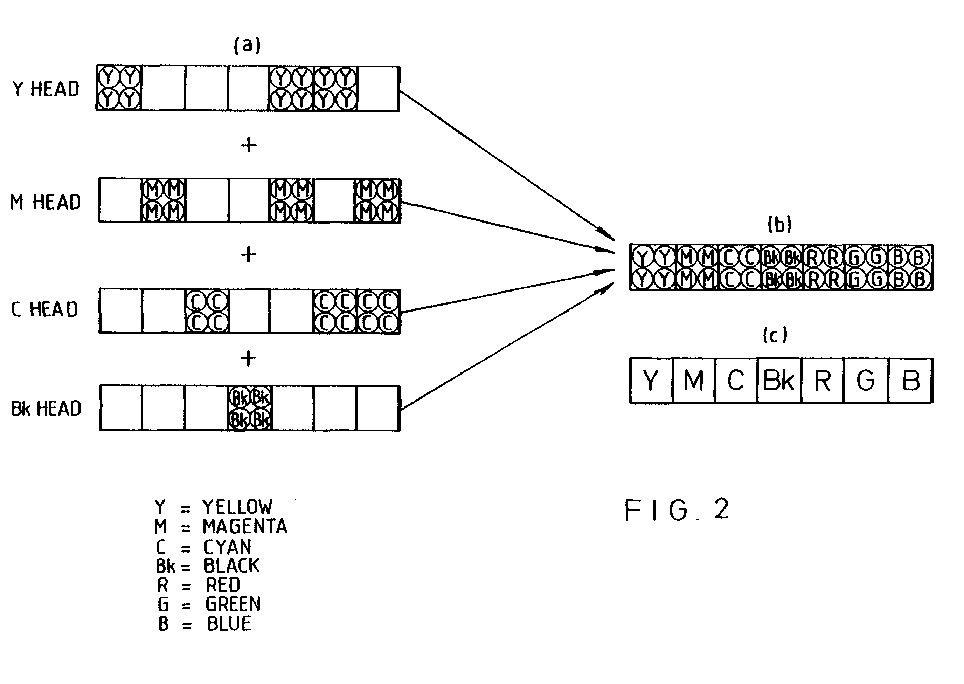

Figure 2 is a diagrammatic representation of a method of obtaining polychromatic output from the machine of Figure 1; and

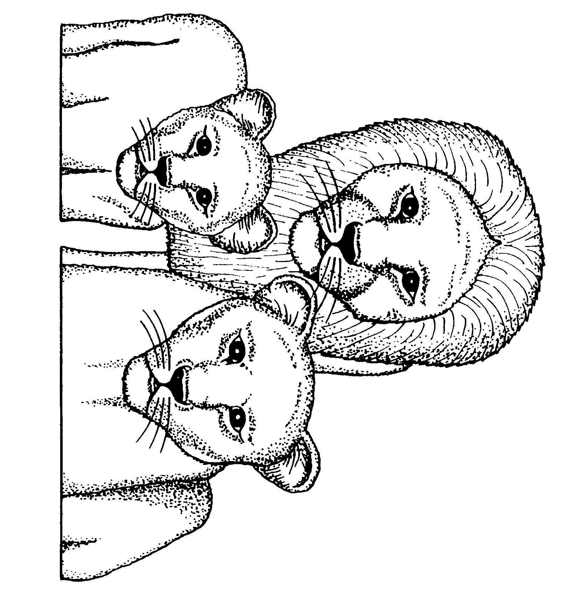

Figure 3 is an example of the output of the machine of Figure 1 showing detail that would not otherwise be possible by any other method.

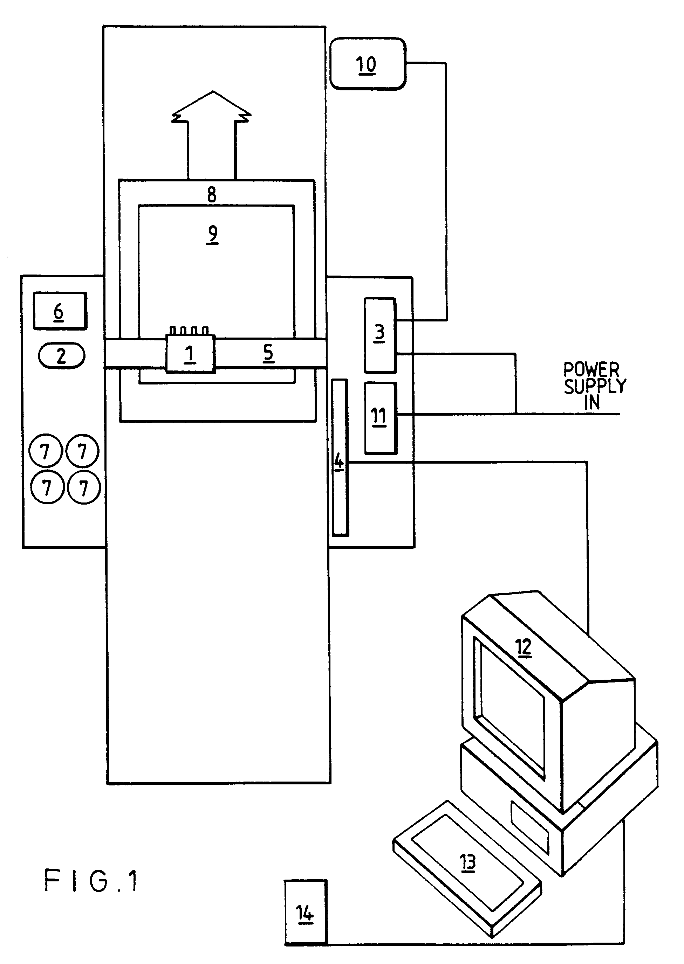

Referring to Figure 1 of the drawings there is shown a bubble-jet head assembly (1) together with a stepping motor (2) for moving the head assembly (1). The stepping motor (2) is connected to a power supply (11). A logic board (4) controls the movement of the bubble-jet head assembly (1) via the stepping motor (2) across a carriageway (5). A pump (6) is provided to clean the bubble-jet head assembly (1) and deliver the liquid food colour to the bubble-jet head assembly (1) from ink reservoirs (7). A movable surface (8) is provided to support an edible medium (9); a stepping motor (10) is connected to a dedicated power supply (3) and to a logic board (4) to advance the movable surface (8). The required image is stored on magnetic media held within a computer (12) and is accessed by entering the required image code via a keyboard, keypad or pointing device (13). If the image is copyrighted it will be protected by an encryption algorithm and may only be decrypted by means of a card reader (14). The image once selected is sent to the bubble-jet head assembly (1) via the logic board (4) e.g. as a bitmap, raster image, postscript or pcx file etc., which will cause the bubble-jet head assembly (1) to move across the carriageway (5) by use of the stepping motor (2) and will then deposit colourant taken from the reservoirs (7) at predetermined positions across the top of the edible medium. As the bubble-jet print head assembly (1) reaches the end of the carriageway (5) the stepping motor (10) will advance the edible medium (9) by moving the movable surface (8) a predetermined distance, e.g. 1/4 inch. The bubble-jet head assembly (1) will then print in the opposite direction along the carriageway (5 ) until it reaches its starting position. The machine will continue the above operations until the required picture, pattern or text has been completed. By this method virtually unskilled operatives can produce decorated cakes or cake tops to a high resolution and a multiplicity of colours e.g. 360 x 360 dots per square inch and 16.7 million colours.

In a preferred embodiment four reservoirs are provided housed in a compartment within the casing, each containing a food colourant of a different colour. The food colourant can of course be black. white, or any other colour, in the preferred embodiment however the four reservoirs contain Yellow, Magenta, Cyan and Black respectively. Each reservoir supplies a separate and distinct printing head; by this means it is possible to print a multiplicity of colours which is not possible with machines having a common reservoir. In general the machine will also include associated elements such as a power supply, a control panel, logic board, and associated wiring. Any suitable means may be provided to operate the machine, e.g. a computer, keypad or pointing device. A movable surface is provided to move the edible medium, e.g. a tray, conveyor belt or rollers. In a preferred embodiment the surface for holding the edible substrate is movable longitudinally of the machine by means of a conveyor belt, chain drive, rollers or similar device and the bubble-jet head assembly is movable laterally of the machine some 2-10 mm above the edible substrate. By these means the bubble-jet head assembly at no time comes into contact with the edible surface, which also means that the machine and method of the present invention can print upon an edible substrate having depth variations of up to. say, 8 mm.

In a preferred embodiment the area of edible surface to be decorated can be from a small dot up to 297 mm x 420 mm (A3) or any other such size as determined from time to time.

The machine of this invention may be used in conjunction with any suitable edible substrate, e.g. Royal icing, gum paste, sugar paste, fresh cream, cover paste, ice cream, butter cream, wafer, rice paper, gelatine, marzipan, fondant, american frosting, meringue, boiled icing, chocolate, boiled sugar, confectioners cream, custard, blancmange, cheesecake filling, pastry, pastilliage, nut paste, wafer, biscuit, cheese, potato, pasta, etc.

Referring to figure (2) there is shown a method by which small dots of different colourant may combine to give a plurality of different colours by the following method. The print head (1 Fig 1) moves over the surface of the edible substrate (9 Fig 1) and each head deposits flying droplets of colourant which are discharged towards the edible substrate according to the instructions received from the computer (12 Fig 1). In the preferred embodiment the preferred colours are Yellow, Magenta, Cyan and Black which when combined on the edible substrate in varying proportions enable the production of polychromatic images to be produced and not just monochromatic images as would be produced by machines that have single heads.

Figure (3) shows an example of the output of the machine in figure (1). It will be seen that it is an incredibly intricate picture of three Lions. This is a higher quality image than has previously been obtainable on an edible substrate.

The machine of this invention enables individual designs to be produced to the same or better standard than has hitherto been commercially feasible and at a fraction of the labour and material cost.

The method and machine of the present invention can operate to apply polychromatic as well as monochromatic images effectively onto edible substrates.

## Claims

1. A machine adapted to print an image onto a surface of an edible substrate (9), **characterised by** a bubble-jet printer head assembly (1), containment means (7) for containing a liquid food colourant, a surface (8) for supporting the said edible substrate (9), said surface and said printer head assembly being movable relative to each other, control means (4) for controlling the said head assembly with printing instructions and for causing said relative movement in accordance with the desired image to be printed upon an edible substrate, and a computer system (12) to store and manipulate the image, the computer system (12) comprising an encryption algorithm by which the image is protectable, and a card reader (14) by which the algorithm can be decrypted.

2. A machine according to claim 1, **characterised by** means adapted to print a polychromatic image.

3. A machine according to claim 2, **characterised in that** said containment means comprises a plurality of reservoirs for a plurality of liquid food colourants.

4. A machine according to any preceding claim, **characterised in that** the bubble-jet head assembly comprises a discharging opening for liquid discharge and an electricity-heat converter, the electricity-heat converter having a region formed by oxidation of at least part of an electro-conductive material, and the region being adapted to a generate heat.

5. A machine as claimed in any preceding claim, **characterised in that** the edible substrate is movable longitudinally of the machine and the head is movable laterally of the machine.

6. A machine as claimed in any of claims 1 to 4, **characterised in that** the edible substrate is movable laterally of the machine and the head is movable longitudinally of the machine.

7. A machine as claimed in any preceding claim, **characterised by** means providing keyboard, keypad or pointing device (13) operation.

8. A machine as claimed in any preceding claim, **characterised by** means adapted to monitor for a copyright holder the number of times a copyright image is printed.

9. A machine as claimed in any preceding claim, **characterised by** means to re-size an image.

10. A machine as claimed in preceding claim, **characterised by** means to change the colour of an image of part thereof.

11. A machine as claimed in any preceding claim, **characterised by** means to limit the ability to recolour images which are covered by copyright.

12. A method of printing a image on a surface of an edible substrate (9), **characterised by** arranging for relative movement between said surface and a bubble-jet printer head assembly (1), providing a scanning device to enable scanning and printing of an image and controlling said printer head assembly (1) to cause a liquid food colourant to be printed upon the substrate in accordance with the desired image, and whereby a computer system (12) is provided to store and manipulate the image, the computer system (12) comprising an encryption algorithm by which the image is protectable and a card reader (14) by which the algorithm can be descrypted.

## Patentansprüche

1. Maschine, die für das Drucken eines Bildes auf eine Oberfläche eines eßbaren Substrats (9) eingerichtet ist, **gekennzeichnet durch** eine BubbleJet-Druckkopfeinheit (1), Behältermittel (7) für die Aufnahme einer flüssigen Lebensmittelfarbe, eine Oberfläche (8) für das Halten des eßbaren Substrats (9), wobei die Oberfläche und die Druckkopfeinheit relativ zueinander beweglich sind, Steuermittel (4) für das Steuern der Kopfeinheit mit Druckbefehlen und für das Bewirken der relativen Bewegung gemäß dem gewünschten Bild, das auf ein eßbares Substrat gedruckt werden soll, und ein Computersystem (12) für das Speichern und Bearbeiten des Bildes, wobei das Computersystem (12) einen Verschlüsselungsalgorithmus, **durch** den das Bild schützbar ist, und einen Kartenleser (14), **durch** den der Algorithmus entschlüsselt werden kann, umfaßt.

2. Maschine nach Anspruch 1, **gekennzeichnet durch** Mittel, die für das Drucken eines mehrfarbiges Bildes eingerichtet sind.

3. Maschine nach Anspruch 2, **dadurch gekennzeichnet, daß** das Behältermittel eine Vielzahl Reservoirs für eine Vielzahl flüssiger Lebensmittelfarben umfaßt.

4. Maschine nach einem der vorhergehenden Ansprüche, **dadurch gekennzeichnet, daß** die BubbleJet-Kopfeinheit eine Abgabeöffnung für die Abgabe von Flüssigkeit und einen Elektrizität/Wärme-Umwandler umfaßt, wobei der Elektrizität/Wärme-Umwandler einen Bereich aufweist, der durch Oxidation zumindest eines Teils eines elektrisch leitenden Materials gebildet wurde, und wobei der Bereich für das Erzeugen von Wärme eingerichtet ist.

5. Maschine nach einem der vorhergehenden Ansprüche, **dadurch gekennzeichnet, daß** das eßbare Substrat längs der Maschine beweglich ist und der Kopf quer zu der Maschine beweglich ist.

6. Maschine nach einem der Ansprüche 1 bis 4, **dadurch gekennzeichnet, daß** das eßbare Substrat quer zu der Maschine beweglich ist und der Kopf längs der Maschine beweglich ist.

7. Maschine nach einem der vorhergehenden Ansprüche, **gekennzeichnet durch** Mittel, die eine Bedienung mittels Tastatur, Tastenfeld oder Zeigegerät (13) ermöglichen.

8. Maschine nach einem der vorhergehenden Ansprüche, **gekennzeichnet durch** Mittel, die für das Überwachen der Anzahl der Male, die ein urheberrechtlich geschütztes Bild gedruckt wird, für einen Urheberrechtsinhaber eingerichtet sind.

9. Maschine nach einem der vorhergehenden Ansprüche, **gekennzeichnet durch** Mittel für das größenmäßige Verändern eines Bildes.

10. Maschine nach einem der vorhergehenden Ansprüche, **gekennzeichnet durch** Mittel für das Verändern der Farbe eines Bildes oder Bildteils.

11. Maschine nach einem der vorhergehenden Ansprüche, **gekennzeichnet durch** Mittel für das Begrenzen der Möglichkeit, Bilder, die urheberrechtlich geschützt sind, farbmäßig zu verändern.

12. Verfahren des Druckens eines Bildes auf eine Oberfläche eines eßbaren Substrats (9), **gekennzeichnet durch** das Sorgen für relative Bewegung zwischen der Oberfläche und einer BubbleJet-Druckkopfeinheit (1), das Vorsehen einer Scannvorrichtung, um das Scannen und Drucken eines Bildes zu ermöglichen, und das Steuern der Druckkopfeinheit (1), um zu bewirken, daß gemäß dem gewünschten Bild mit einer flüssigen Lebensmittelfarbe auf das Substrat gedruckt wird, wobei ein Computersystem (12) für das Speichern und Bearbeiten des Bildes vorgesehen ist, wobei das Computersystem (12) einen Verschlüsselungsalgorithmus, **durch** den das Bild schützbar ist, und einen Kartenleser (14), **durch** den der Algorithmus entschlüsselt werden kann, umfaßt.

## Revendications

1. Machine adaptée pour imprimer une image sur une surface d'un substrat comestible (9), **caractérisée par** une tête d'impression à bulles d'encre (1), un moyen de confinement (7) pour contenir un colorant alimentaire liquide, une surface (8) pour supporter ledit substrat comestible (9), ladite surface et ladite tête d'impression étant mobiles en fonction l'une de l'autre, un moyen de contrôle (4) pour commander ladite tête avec des instructions pour l'impression et pour produire ledit mouvement relatif conformément à l'image désirée pour être imprimée sur un substrat comestible, et un ordinateur (12) pour stocker et manipuler l'image, l'ordinateur (12) comprenant un algorithme de cryptage par lequel les droits d'exclusivité sur l'image peuvent être protégés, et un lecteur de carte (14) par lequel l'algorithme peut être décrypté.

2. Machine selon la revendication 1, **caractérisée par** un moyen adapté pour imprimer une image polychrome.

3. Machine selon la revendication 2, **caractérisée en ce que** ledit moyen de confinement comprend une pluralité de réservoirs pour contenir une pluralité de colorants alimentaires liquides.

4. Machine selon l'une quelconque des revendications précédentes, **caractérisée en ce que** la tête d'impression à bulles d'encre comporte une ouverture de décharge pour décharger le liquide et un convertisseur électricité-chaleur, le convertisseur électricité-chaleur ayant une région formée par l'oxydation d'au moins une partie d'un matériau électroconducteur, et la région étant adaptée à une chaleur générée.

5. Machine selon l'une quelconque des revendications précédentes, **caractérisée en ce que** le substrat comestible est mobile longitudinalement à la machine et la tête est mobile latéralement à la machine.

6. Machine selon l'une quelconque des revendications 1 à 4, **caractérisée en ce que** le substrat comestible est mobile latéralement à la machine et la tête est mobile longitudinalement à la machine.

7. Machine selon l'une quelconque des revendications précédentes, **caractérisée par** un moyen permettant le fonctionnement d'un clavier, d'un pavé numérique ou d'un dispositif de pointage (13).

8. Machine selon l'une quelconque des revendications précédentes, **caractérisée par** un moyen adapté au contrôle, pour le détenteur des droits exclusifs, du nombre de fois où son image est imprimée.

9. Machine selon l'une quelconque des revendications précédentes, **caractérisée par** un moyen pour redimensionner une image.

10. Machine selon l'une quelconque des revendications précédentes, **caractérisée par** un moyen pour changer la couleur d'une image ou d'une partie de celle-ci.

11. Machine selon l'une quelconque des revendications précédentes, **caractérisée par** un moyen pour limiter la possibilité de recolorer des images qui sont protégées par des droits d'exclusivité.

12. Méthode d'impression d'une image sur une surface d'un substrat comestible (9), **caractérisée par** l'adaptation pour le mouvement relatif entre ladite surface et une tête d'impression à bulles d'encre (1), l'apport d'un périphérique de numérisation pour permettre la numérisation et l'impression d'une image et la commande de ladite tête d'impression (1) pour provoquer l'impression d'un colorant alimentaire liquide sur le substrat conformément à l'image désirée, et moyennant quoi un ordinateur (12) est fourni pour stocker et manipuler l'image, l'ordinateur (12) comprenant un algorithme de cryptage par lequel les droits d'exclusivité sur l'image peuvent être protégés, et un lecteur de carte (14) par lequel l'algorithme peut être décrypté.
